# FASCICULE DE BREVET EUROPEEN

(11) **EP 3 080 681 B1**
(45) Date de publication et mention de la délivrance du brevet: **03.06.2020**
(21) Numéro de dépôt: 14833148.1
(22) Date de dépôt: 15.12.2014
(51) Int. Cl.: G06F 3/01, B60K 37/06, G06F 3/041

(54) **CONTROLE D'ACTIONNEURS D'UNE SURFACE DE COMMANDE SENSITIVE A RETOUR HAPTIQUE**
STEUERUNG VON AKTOREN EINER EMPFINDLICHEN BEFEHLSOBERFLÄCHE MIT HAPTISCHER RÜCKKOPPLUNG
CONTROL OF ACTUATORS ON A SENSITIVE COMMAND SURFACE WITH HAPTIC FEEDBACK

(30) Priorité: 13.12.2013 FR 1302926
(43) Date de publication de la demande: 19.10.2016
(73) Titulaire: DAV, 94046 Créteil Cedex (FR)
(72) Inventeur: AUBRY, Anthony, F-94046 Créteil Cedex (FR); VANHELLE, Stéphane, F-94046 Creteil Cedex (FR)
(74) Mandataire: Delplanque, Arnaud
(86) Numéro de dépôt international: PCT/FR2014/000280
(87) Numéro de publication internationale: WO 2015/086927

(56) Documents cités:
- EP-A1- 2 320 308
- EP-A2- 2 590 067
- FR-A1- 2 922 035
- FR-A1- 2 961 610
- US-A1- 2012 232 780

## Description

### DOMAINE TECHNIQUE DE L'INVENTION

L'invention se rapporte au domaine des interfaces homme-machine proposant un retour haptique, pour véhicule automobile principalement.

L'invention concerne un dispositif de contrôle d'au moins deux actionneurs d'une surface de commande sensitive à retour haptique et un procédé de contrôle d'au moins deux actionneurs d'une surface de commande sensitive à retour haptique.

### ETAT DE LA TECHNIQUE ANTERIEURE

Le principe du retour haptique est d'apporter un retour, généralement vibratoire dans une interface homme-machine, dite zone d'interaction. Un retour haptique est généralement vibratoire, mais il peut également s'agir de phénomènes d'interaction électrique.

On appelle zone d'interaction la zone où il y a interaction entre un doigt/une main/un objet imitant le toucher et une surface sensitive, capacitive ou résistive par exemple. Par exemple, dans le cas d'un écran tactile de véhicule automobile, la zone d'interaction peut être une zone où apparait une icône de changement de radio, ou une zone dite « slider » permettant d'augmenter le volume de la radio. Dans le cas d'un écran de contrôle climatisation automobile, dit « control panel automobile », la zone d'interaction peut correspondre aux pictogrammes du type désembuage, ou un bouton rotatif.

Généralement les différentes zones d'interaction d'un véhicule automobile sont éloignées les unes des autres. Ainsi, la mise en place d'un retour haptique sur ces différentes zones nécessite l'utilisation de plusieurs actionneurs, voire dans le cas de l'haptique dit localisé, l'utilisation d'un actionneur par zone d'interactions.

L'inconvénient de cette solution est le coût engendré par la présence d'un nombre d'actionneurs élevé mais surtout par la présence d'autant de cartes électroniques nécessaires au pilotage des actionneurs que d'actionneurs.

FR2961610 décrit un dispositif haptique d'un équipement de véhicule, comportant une surface tactile mise en mouvement par au moins un actuateur et un dispositif de contrôle comportant un multiplexeur . Ce document prévoit une première étape de mesure de l'effort appliqué sur la surface tactile, une deuxième étape pour sélectionner et activer un effet haptique en fonction de la mesure du dit effort et de sa position sur la surface tactile, et pour générer un signal représentant un effet haptique lorsqu'un tel effet haptique est activé, enfin une troisième étape lors de laquelle un conditionneur reçoit le signal haptique apte à commander l'actuateur pour produire l'effet haptique sélectionné sur la surface tactile. EP2590067 et EP2320308 décrivent des surfaces tactiles ou touchpads dits "multitouch" i.e. capables de détecter au moins deux informations de toucher simultanées, sont bien connus de la personne du métier, ainsi que l'emploi d'un ou plusieurs effets de retour haptique de durée donnée avec de telles surfaces tactiles ou touchpads . FR2922035 et US2012232780 enseignent eux aussi comment commander la durée d'un retour haptique.

### EXPOSE DE L'INVENTION

L'invention vise à remédier à tout ou partie des inconvénients de l'état de la technique identifiés ci-dessus, et notamment à proposer des moyens permettant de réduire le coût associé au pilotage des actionneurs.

Dans ce dessein, un aspect de l'invention se rapporte à un dispositif de contrôle d'un groupe d'actionneurs d'une surface de commande sensitive à retour haptique d'un équipement de véhicule automobile, ledit groupe d'actionneurs comportant au moins un premier actionneur et un deuxième actionneur, ledit dispositif de contrôle comportant une carte électronique et un moyen de basculement relié à la carte électronique, la réception d'une information de toucher par la carte électronique entraînant la sélection par le moyen de basculement du premier actionneur. Une fois le premier actionneur sélectionné par le moyen de basculement, un signal haptique généré par la carte électronique peut transiter vers le premier actionneur afin de l'alimenter et de définir le retour généré par l'actionneur. Il s'agit généralement d'un retour vibratoire, ayant des caractéristiques en terme de forme d'onde, de fréquence et de durée.

L'utilisation d'un moyen de basculement permettant à une seule carte électronique d'activer un actionneur du groupe d'actionneurs permet de réduire les coûts de deux points de vue :
- tout d'abord en limitant le nombre de cartes électroniques, ou cartes de pilotage de la surface de commande sensitive à retour haptique. En effet, une seule carte électronique est maintenant associée à une pluralité d'actionneurs ;
- mais aussi en activant non plus tous les actionneurs d'une surface sensitive pour effectuer un retour haptique, mais un seul actionneur en fonction d'une zone d'interaction, i.e. de l'information de toucher réceptionnée par la carte électronique. En effet, un signal haptique peut comporter des informations de coordonnées correspondant à la zone d'interaction « touchée » par un utilisateur ou objet.

On entend par information de toucher dans le cadre de la présente demande, une information du type signal correspondant au toucher d'un utilisateur, ou d'un objet sur la surface sensitive. On entend par signal haptique dans le cadre de cette demande un signal d'alimentation d'un actionneur (forme d'onde, fréquence, durée) qui définit le retour, par exemple la vibration, généré par l'actionneur.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles :
- la carte électronique comporte une horloge mémorisant une première durée lors de la réception simultanée par la carte électronique d'une première information de toucher et d'une deuxième information de toucher, le premier actionneur étant sélectionné par le moyen de basculement pendant la première durée, le deuxième actionneur étant sélectionné par le moyen de basculement lorsque la première durée est écoulée ;
- la carte électronique comporte une horloge dans laquelle est stockée une première valeur temporelle lors de la réception d'une information de toucher, un actionneur parmi le groupe d'actionneurs étant sélectionné par le moyen de basculement de façon répétée selon un intervalle de temps correspondant à la première valeur temporelle ;
- le moyen de basculement est un multiplexeur. Il peut s'agir par exemple d'un circuit du type NXP 74HC4052 ;
- la carte électronique est reliée à une source d'alimentation ;

L'invention se rapporte également à un procédé de contrôle, au moyen d'un dispositif de contrôle selon l'une quelconque des revendications précédentes, d'un groupe d'actionneurs d'une surface de commande sensitive à retour haptique d'un équipement de véhicule automobile, ledit groupe d'actionneurs comportant au moins un premier actionneur et un deuxième actionneur, ledit procédé comportant :
- une première étape de réception et d'analyse par la carte électronique d'une information de toucher ;
- une deuxième étape d'envoi par la carte électronique d'une information de commande au moyen de basculement, ladite information de commande désignant le premier actionneur ;
- une troisième étape de basculement du moyen de basculement vers le premier actionneur.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique d'un dispositif de contrôle selon un mode de réalisation de l'invention ;
- la figure 2, une vue schématique d'une façade automobile comportant une surface de commande sensitive à retour haptique ;
- la figure 3, une vue schématique d'une autre façade automobile comportant une surface de commande sensitive à retour haptique.

Pour plus de clarté, les éléments identiques ou similaires sont repérés par des signes de référence identiques sur l'ensemble des figures.

### DESCRIPTION DETAILLEE D'UN MODE DE REALISATION

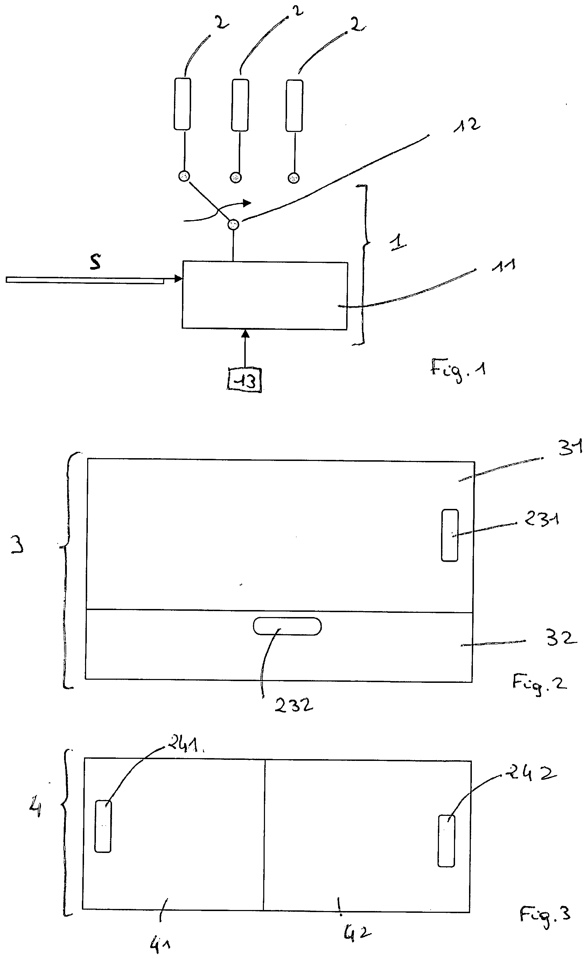

A la figure 1 est illustrée une vue schématique d'un dispositif de contrôle 1 de trois actionneurs 2 d'une surface de commande sensitive à retour haptique. Le dispositif de contrôle 1 comporte une carte électronique 11, ou carte de pilotage, et un moyen de basculement 12, par exemple un multiplexeur. La carte électronique 11 est reliée à une source d'alimentation 13. La carte électronique peut recevoir en entrée une information de toucher S. L'information de toucher S correspond à un toucher d'un utilisateur, ou d'un objet simulant le toucher d'un utilisateur, sur la surface de commande sensitive au niveau d'une zone d'interaction. Chaque actionneur correspond à une zone d'interaction et chaque information de toucher correspond à une zone d'interaction. Ainsi, la réception par la carte électronique d'une information de toucher S entraine la sélection par le multiplexeur de l'actionneur correspondant à l'information de toucher reçue et donc à la zone d'interaction réveillée. La programmation des composants de la carte électronique permet d'associer à chaque information de toucher, et donc à chaque zone d'interaction, un actionneur. Une seule carte électronique 11 est ainsi utilisée pour la commande de plusieurs actionneurs, ce qui permet de réduire les coûts systèmes.

Lors de l'appui simultané par un utilisateur sur deux zones fonctionnelles correspondant chacune à un actionneur différent, un décalage temporel d'envoi des effets haptiques peut être géré par le dispositif de contrôle. En effet, la carte électronique 11 comporte une horloge mémorisant une première durée lors de la réception simultanée par la carte électronique 11 d'une première information de toucher et d'une deuxième information de toucher. Cette première durée correspond au décalage temporel entre les retours, vibratoires par exemple, des premier et deuxième actionneurs correspondant respectivement à la première information de toucher et à la deuxième information de toucher. Ainsi lors de la réception simultanée de la première et de la deuxième information de toucher par la carte électronique, le premier actionneur est sélectionné par le moyen de basculement, et donc alimenté par la source d'alimentation 13 pendant la première durée, puis au bout de la première durée, le deuxième actionneur est sélectionné par le moyen de basculement.

La présence du moyen de basculement permettant de piloter un groupe d'actionneurs 2 par une seule carte électronique 11 permet également de générer des effets haptiques du type ondelette de surface. Ainsi, lors de la réception d'une information de toucher par la carte électronique, une première valeur temporelle peut être stockée dans une horloge de la carte électronique, et un actionneur parmi le groupe d'actionneur est sélectionné par le dispositif de basculement de façon répétée selon un intervalle de temps correspondant à ladite première valeur temporelle.

A la figure 2 est illustrée une façade de tableau de bord 3 d'un véhicule automobile, comportant une première zone 31 fonctionnelle du type à écran tactile et une deuxième zone 32 fonctionnelle comportant des touches d'accès direct (pour la commande de la climatisation par exemple). La première zone 31 comporte un premier actionneur 231 et la deuxième zone 32 comporte un deuxième actionneur 232. Ceci permet d'obtenir un bon compromis performance de la surface sensitive- coût à mettre en œuvre. Le premier actionneur 231 et le deuxième actionneur 232 sont sélectionnés par un même moyen de basculement relié à la même carte électronique.

A la figure 3 est illustrée une façade de tableau de bord 4 d'un véhicule automobile. Dans cette configuration, la façade automobile a une taille importante. Ainsi la façade 4 est découpée en une première zone fonctionnelle 41 et une deuxième zone fonctionnelle 42. La première zone 41 comporte un premier actionneur 241 et la deuxième zone 42 comporte un deuxième actionneur 242. Ce découpage permet d'utiliser des actionneurs du type ERM, technologie à faible coût. Le premier actionneur 241 et le deuxième actionneur 242 sont sélectionnés par un même moyen de basculement relié à la même carte électronique.

L'invention n'est pas limitée aux modes de réalisation précédemment décrits en référence aux figures et des variantes pourraient être envisagées sans sortir du cadre de l'invention.

## Revendications

1. Dispositif (1) de contrôle d'un groupe d'actionneurs (2) d'une surface de commande sensitive à retour haptique d'un équipement de véhicule automobile, ledit groupe d'actionneurs (2) comportant au moins un premier actionneur et un deuxième actionneur, ledit dispositif de contrôle comportant :
- une carte électronique (11) ;
- un moyen de basculement (12) relié à la carte électronique ;
**caractérisé en ce que** chaque actionneur correspond à une zone d'interaction et **en ce que** la réception d'une information de toucher (S) correspondant à une zone d'interaction, par la carte électronique (11) entraîne la sélection par le moyen de basculement (12) de l'actionneur correspondant.

2. Dispositif de contrôle selon la revendication 1 **caractérisé en ce que** la carte électronique (11) comporte une horloge mémorisant une première durée lors de la réception simultanée par la carte électronique (11) d'une première information de toucher et d'une deuxième information de toucher, le premier actionneur étant sélectionné par le moyen de basculement (12) pendant la première durée, le deuxième actionneur étant sélectionné par le moyen de basculement (12) lorsque la première durée est écoulée.

3. Dispositif de contrôle selon l'une quelconque des revendications précédentes **caractérisé en ce que** la carte électronique (11) comporte une horloge dans laquelle est stockée une première valeur temporelle lors de la réception d'une information de toucher (S), un actionneur parmi le groupe d'actionneurs (2) étant sélectionné par le moyen de basculement (12) de façon répétée selon un intervalle de temps correspondant à la première valeur temporelle.

4. Dispositif de contrôle selon l'une quelconque des revendications précédentes **caractérisé en ce que** le moyen de basculement (12) est un multiplexeur.

5. Dispositif de contrôle selon l'une quelconque des revendications précédentes **caractérisé en ce que** la carte électronique (11) est reliée à une source d'alimentation (13).

6. Procédé de contrôle, au moyen d'un dispositif de contrôle (1) selon l'une quelconque des revendications précédentes, d'un groupe d'actionneurs (2) d'une surface de commande sensitive à retour haptique d'un équipement de véhicule automobile, ledit groupe d'actionneurs comportant au moins un premier actionneur et un deuxième actionneur, ledit procédé comportant :
- une première étape de réception et d'analyse par la carte électronique (11) d'une information de toucher;
- une deuxième étape d'envoi par la carte électronique (11) d'une information de commande au moyen de basculement (12), ladite information de commande désignant le premier actionneur ;
- une troisième étape de basculement du moyen de basculement (12) vers le premier actionneur.

## Patentansprüche

1. Vorrichtung (1) zur Steuerung einer Gruppe von Aktoren (2) einer empfindlichen Bedienfläche mit haptischer Rückmeldung einer Kraftfahrzeugausrüstung, die Gruppe von Aktoren (2) aufweisend mindestens einen ersten Aktor und einen zweiten Aktor, die Steuervorrichtung aufweisend:
- eine Leiterplatte (11);
- ein Umschaltmittel (12), das mit der Leiterplatte verbunden ist;
**dadurch gekennzeichnet, dass** jeder Aktor einem Interaktionsbereich entspricht, und dadurch, dass der Empfang einer Berührungsinformation (S), die einem Interaktionsbereich entspricht, durch die Leiterplatte (11), die Auswahl des entsprechenden Aktors durch das Umschaltmittel (12) hervorruft.

2. Steuervorrichtung nach Anspruch 1, **dadurch gekennzeichnet, dass** die Leiterplatte (11) einen Taktgeber aufweist, der beim gleichzeitigen Empfang, durch die Leiterplatte (11), einer ersten Berührungsinformation und einer zweiten Berührungsinformation, eine erste Dauer speichert, wobei der erste Aktor durch das Umschaltmittel (12) während der ersten Dauer ausgewählt wird, wobei der zweite Aktor durch das Umschaltmittel (12) ausgewählt wird, wenn die erste Dauer verstrichen ist.

3. Steuervorrichtung nach einem der vorhergehenden Ansprüche, **dadurch gekennzeichnet, dass** die Leiterplatte (11) einen Taktgeber aufweist, in welchem beim Empfang einer Berührungsinformation (S) ein erster Zeitwert gespeichert wird, wobei ein Aktor aus der Gruppe von Aktoren (2) durch das Umschaltmittel (12) gemäß einem Zeitintervall, das dem ersten Zeitwert entspricht, wiederholt ausgewählt wird.

4. Steuervorrichtung nach einem der vorhergehenden Ansprüche, **dadurch gekennzeichnet, dass** das Umschaltmittel (12) ein Multiplexer ist.

5. Steuervorrichtung nach einem der vorhergehenden Ansprüche, **dadurch gekennzeichnet, dass** die Leiterplatte (11) mit einer Stromversorgung (13) verbunden ist.

6. Verfahren zur Steuerung, mittels einer Steuervorrichtung (1) nach einem der vorhergehenden Ansprüche, einer Gruppe von Aktoren (2) einer empfindlichen Bedienfläche mit haptischer Rückmeldung einer Kraftfahrzeugausrüstung, die Gruppe von Aktoren aufweisend mindestens einen ersten Aktor und einen zweiten Aktor, das Verfahren aufweisend:
- einen ersten Schritt des Empfangens und Analysierens einer Berührungsinformation durch die Leiterplatte (11);
- einen zweiten Schritt des Sendens einer Bedieninformation an das Umschaltmittel (12) durch die Leiterplatte (11), wobei die Bedieninformation den ersten Aktor bezeichnet;
- einen dritten Schritt des Umschaltens des Umschaltmittels (12) zu dem ersten Aktor.

## Claims

1. Device (1) for controlling a group of actuators (2) of a sensitive control surface with haptic feedback of a motor vehicle apparatus, said group of actuators (2) comprising at least a first actuator and a second actuator, said control device comprising:
- an electronic card (11);
- a switching means (12) connected to the electronic card;
**characterized in that** each actuator corresponds to one interaction area and **in that** the reception of touch information (S), corresponding to one interaction area, by the electronic card (11) causes the selection by the switching means (12) of the corresponding actuator.

2. Control device according to Claim 1, **characterized in that** the electronic card (11) comprises a clock storing a first time period during the simultaneous reception by the electronic card (11) of a first touch information element and a second touch information element, the first actuator being selected by the switching means (12) during the first time period, the second actuator being selected by the switching means (12) when the first time period has elapsed.

3. Control device according to either one of the preceding claims, **characterized in that** the electronic card (11) comprises a clock in which a first time value is stored during the reception of touch information (S), one actuator from the group of actuators (2) being selected by the switching means (12) in a repeated manner according to a time interval corresponding to the first time value.

4. Control device according to any one of the preceding claims, **characterized in that** the switching means (12) is a multiplexer.

5. Control device according to any one of the preceding claims, **characterized in that** the electronic card (11) is connected to a power supply source (13).

6. Method for controlling, by means of a control device (1) according to any one of the preceding claims, a group of actuators (2) of a sensitive control surface with haptic feedback of a motor vehicle apparatus, said group of actuators comprising at least a first actuator and a second actuator, said method comprising:
- a first step of reception and analysis by the electronic card (11) of touch information;
- a second step of sending by the electronic card (11) of control information to the switching means (12), said control information designating the first actuator;
- a third step of switching the switching means (12) to the first actuator.
